# EUROPEAN PATENT SPECIFICATION

(11) **EP 1 344 627 B1**
(45) Date of publication and mention of the grant of the patent: **14.12.2005**
(21) Application number: 03005761.6
(22) Date of filing: 14.03.2003
(51) Int. Cl.: B29C 47/62, B29C 47/38

(54) **Screw for plasticising thermoplastic resins with three flights and streams of different speed therein**
Plastifizierschnecke für Thermoplaste mit drei Gewindegängen und unterschiedlich schnellen Materialströmen darin
Vis de plastification de resins thermoplastiques comportant trois files avec des flux de matiére différents

(30) Priority: 14.03.2002 IT MI20020533
(43) Date of publication of application: 17.09.2003
(73) Proprietor: Ferioli Filippo S.p.A., 21055 Gorla Minore (IT)
(72) Inventor: Rossi, Albino, 21055 Gorla Minore (Varese) (IT)
(74) Representative: Forattini, Amelia

(56) References cited:
- WO-A-98/37952
- GB-A- 2 111 397
- US-A- 4 000 884
- US-A- 4 405 239
- US-A- 4 798 472
- US-B1- 6 176 606
- PATENT ABSTRACTS OF JAPAN vol. 016, no. 212 (M-1250), 19 May 1992 (1992-05-19) -& JP 04 037506 A (UBE IND LTD), 7 February 1992 (1992-02-07)
- PATENT ABSTRACTS OF JAPAN vol. 006, no. 172 (M-154), 7 September 1982 (1982-09-07) -& JP 57 084830 A (TOSHIBA MACH CO LTD), 27 May 1982 (1982-05-27)

## Description

The present invention relates to a plasticating screw, particularly for machines for processing thermoplastic resins.

In particular, the invention relates to screws for extruders and molding presses for plastic materials.

Although single-screw systems are constructively simpler and allow to achieve good plasticizing and mixing, systems with two co-rotating or contrarotating screws are used in order to obtain a high-quality product that is free from degraded particles, but such systems are very complicated and expensive.

The aim of the present invention is to provide a screw, particularly for machines for processing thermoplastic resins, that overcomes the drawbacks of the cited background art.

An object of the invention is to provide a screw that allows to increase production for an equal rotation rate and power.

A further object of the invention is to provide a screw that allows to process thermoplastic granules without degradation.

A further object is to provide a screw that allows to avoid pressure pulses.

A further object is to provide a screw that allows to achieve perfect mixing.

A further object is to provide a screw that remains balanced in order to avoid metal-on-metal contact.

A further object is to provide a screw that can be used as a single screw to obtain a machine that is economically advantageous.

This aim and these and other objects that will become better apparent hereinafter are achieved by a plasticating screw, particularly for machines for processing thermoplastic resins as claimed in the appended claims.

Further characteristics and advantages will become better apparent from the description of preferred but not exclusive embodiments of the invention, illustrated only by way of non-limitative example in the accompanying drawings, wherein:

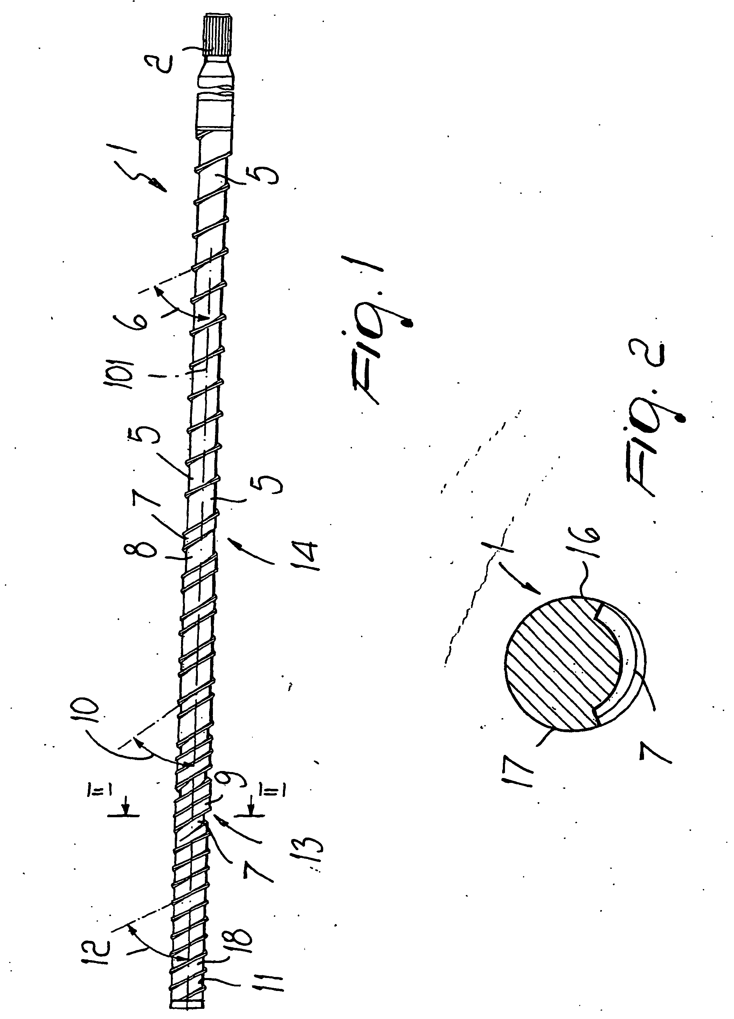

Figure 1 is a side view of the screw according to the invention;
Figure 2 is a sectional view of the screw, taken along the plane II-II of Figure 1;

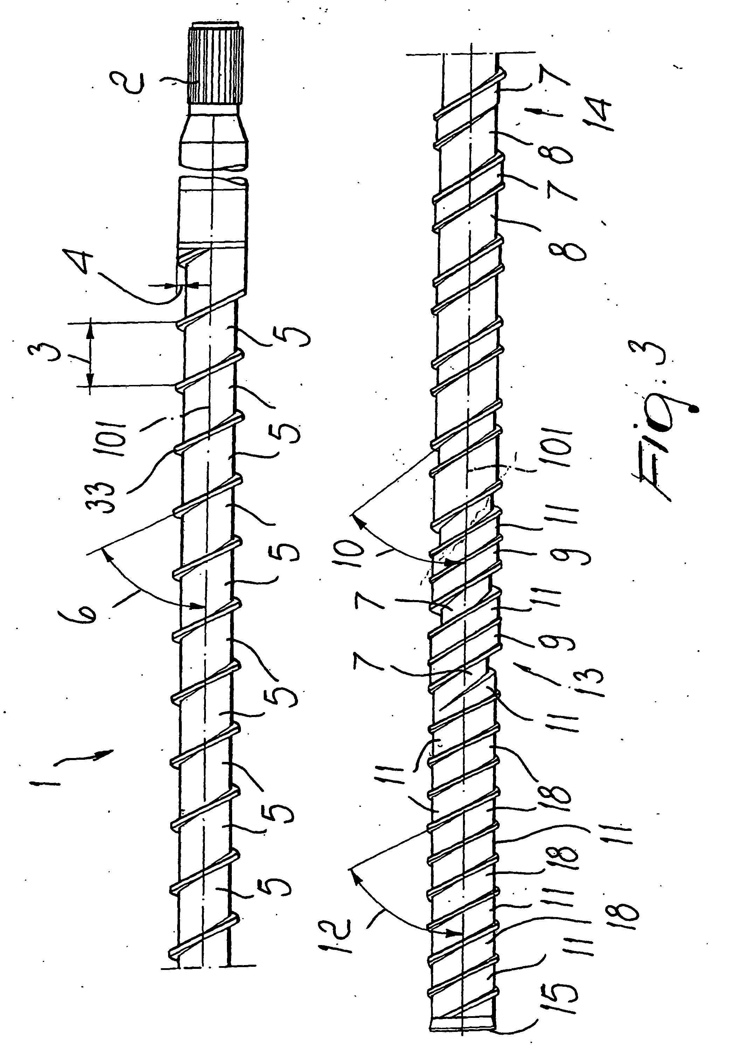

Figure 3 is an enlarged-scale view of portions of the screw according to the invention.

With reference to the cited figures, the screw according to the invention, generally designated by the reference numeral 1, can be used in a machine for processing granules of thermoplastic material, of a per se known type, which is not described here for the sake of brevity.

The screw 1 includes a power coupling 2 for rotation and a pitch 3 of the thread 33 that in the initial portion acts as a screw feeder and is used to determine the initial volume contained in 360° of thread.

The thread 33 has a depth 4 and forms initially a first conveyance channel 5.

The thread forms an angle 6 with the axis 101 of the screw, and the angle determines the thrust applied to the granules.

At the end of the channel 5 there is an initial portion of a split channel 14, which is divided into a channel 7 for collecting the melted material and a friction channel 8 adapted to accommodate the solid fraction.

The thread of the split channel forms a friction angle 10 with the axis 101 of the screw, and the split channel continues, forming a pressure channel 11, which has a pressure angle 12, and a balancing and friction channel 9.

The reference numeral 13 designates the end of the channel of the melted material, and the reference numeral 15 designates an anti-memory laminar flow where the screw ends.

The reference numeral 16 designates the laminar flow barrier, while the reference numeral 17 designates the barrier of the balancing channel.

The screw 1 according to the invention is particularly useful for processing granular plastics, and is particularly convenient for increasing productivity, ensuring excellent mixing, avoiding pulses, both by using it as an extrusion screw and as a molding screw, without requiring increases in power, for an equal outside diameter and rotation rate, differently from other screws.

After the material has been introduced in the channel, the volume at zero pressure is taken into account and the calculation is evaluated over 360 degrees, taking into account that the pitch 3 will be equal to, or smaller than, the outside diameter for pressure generation. The depth of the thread 4 takes into account the shape of the granules, if associated with other materials having different shapes, for example cylindrical granules, ground materials, densified materials, coloring pigments, fibers and reinforcing minerals, powders, et cetera.

The rotation is calculated and can be comprised between 30 and 40 meters calculated on the outside circumference.

The material that is introduced and in contact with the heated cylinder is compressed during its flow in the channel 5 as the volume decreases. To achieve reduction, it is possible to act by increasing the volume and by decreasing the pitch of the threads.

The volume reduction effect, associated with the temperature, and the rotation cause the melting of the granules to start.

To mutually separate the solid cores and the melted particles, the thread 14 is split, thus generating a barrier with a significantly reduced diameter and forming a channel 7 for the melted fraction and a channel 8 for the solid cores.

The melted fraction channel 7 has a shape that increases in volume in order to collect more and more material, which increases its flow speed.

The channel 8 for the solid fraction has a shape that decreases in volume; the variation of the angle 10 varies and the splitting of the threads that have increased the pitch increase the friction of the solid cores, increasing the melting action and the passing of the barrier thread 16.

The solid cores generate a thrust with radial force. Such thrust is greater than that of the melted material. This creates an additional splitting of the threads of the solid cores in a balancing channel 9. In the friction channel 8 and the balancing channel 9, the closures of the barrier are arranged at 180° to each other and are designated by the reference numerals 16 and 17.

At the end of the barriers 16 and 17 the material is completely melted. In this point, designated by the reference numeral 13, the thread of the channel 14 enters the channel 18, while the thread of the channel 9 enters the channel 11.

The channel 11 has a slightly higher flow-rate, since it has received melted material generated by a larger portion of laminar flow.

The final laminar flow ring 15 is meant to disperse the memories of the two channels.

In practice it has been found that the invention achieves the intended aim and objects, a screw having been provided whose thread profile is aimed at balancing and centering the screw in the cylinder and at separating the particles that have started melting due to the heated cylinder and to impart two speeds, a very high one to the melted material, and to slow the cores of the granules that are still solid. The threads, with the aid of the change of the bottom and of the angle, alternately reduce and increase the diameter, imparting to the solid granules a considerable compression, which combined with the rotation generates upon contact a friction that facilitates melting and optimum mixing also due to the different speeds.

The screw according to the invention is susceptible of numerous modifications and variations, within the scope of the appended claims.

The materials used, as well as the dimensions, may of course be any according to the requirements and the state of the art.

## Claims

1. A plasticating screw, particularly for machines for processing thermoplastic resins, **characterized in that** it comprises:
a first section having a first thread (33) having a first constant pitch (10) and a depth (4) forming a first conveyance channel (5);
a second section comprising a second thread forming a split channel (14) with said first thread, said split channel (14) being divided into a collecting channel (7), for collecting the melted material and a friction channel (8), adapted to accommodate the solid fraction, said friction channel (8) having the same depth of said first channel, said collecting channel (7) having a increasing depth;
a third section comprising a third thread which has a pressure angle (12) with the axis (101) of the screw and forms a pressure channel (11) and a balancing and friction channel (9); at the end of said third section said collecting channel (7) having reached its maximum depth;
a fourth section (13) wherein the depth of said collecting channel (7) decreases to the depth of said pressure channel (11);
a fifth section wherein said second thread and third thread decrease and end into said first channel (7, 18) and pressure channel (11).

2. A screw according to claim 1, **characterized in that** said first thread (33) forms a first angle (6) with the axis (101) of the screw, and said angle determines the thrust applied to the granules.

3. The screw according to claim 1 or 2, **characterized in that** said thread of the split channel forms a friction angle (10) with the axis (101) of the screw,

4. The screw according to one or more of the preceding claims, **characterized in that** it ends in an antimemory laminar flow ring (15).

## Patentansprüche

1. Plastifizierungsschnecke, insbesondere für Maschinen zur Verarbeitung thermoplastischer Harze, **dadurch gekennzeichnet, daß** sie aufweist:
einen ersten Abschnitt mit einem ersten Gewindegang (33) mit einer ersten konstanten Steigung (10) und einer Tiefe (4), die einen ersten Förderkanal (5) ausbildet,
einen zweiten Abschnitt, der einen zweiten Gewindegang aufweist, der einen Teilungskanal (14) mit dem ersten Gewindegang ausbildet, wobei der Teilungskanal (14) in einen Sammelkanal (7) zum Sammeln des geschmolzenen Materials und einen Reibungskanal 8 aufgeteilt ist, der dazu vorgesehen ist, die feste Fraktion aufzunehmen, wobei der Reibungskanal (8) die gleiche Tiefe wie der erste Kanal aufweist und der Sammelkanal (7) eine ansteigende Tiefe besitzt,
einen dritten Abschnitt aufweisend einen dritten Gewindegang, der mit der Achse (101) der Schnecke einen Druckwinkel (12) besitzt und einen Druckkanal (11) und einen Ausgleichs- und Reibungskanal (9) ausbildet,
wobei der Sammelkanal (7) am Ende des dritten Abschnitts seine maximale Tiefe erreicht hat,
einen vierten Abschnitt (13), wobei die Tiefe des Sammelkanals (7) auf die Tiefe des Druckkanals (11) abnimmt,
einen fünften Abschnitt, wobei der zweite Gewindegang und der dritte Gewindegang abnehmen und in dem ersten Kanal (7), (18) und dem Druckkanal (11) enden.

2. Schnecke nach Anspruch 1, **dadurch gekennzeichnet, daß** der erste Gewindegang (33) einen ersten Winkel (6) mit der Achse (101) der Schnecke ausbildet und der Winkel den auf die Granulate aufgebrachten Druck bestimmt.

3. Schnecke nach Anspruch 1 oder 2, **dadurch gekennzeichnet, daß** der Gewindegang des Teilungskanals einen Reibungswinkel (10) mit der Achse (101) der Schnecke ausbildet.

4. Schnecke nach einem oder mehreren der vorhergehenden Ansprüche, **dadurch gekennzeichnet, daß** sie in einem informationslöschenden (antimemory) laminaren Strömungsring (15) endet.

## Revendications

1. Vis d'extrusion, plus particulièrement pour des machines destinées à traiter des résines thermoplastiques, **caractérisée en ce qu'**elle comprend :
une première section ayant un premier filet (33) ayant un premier pas constant (10) et une profondeur (4) formant un premier canal de transfert (5) ;
une seconde section comprenant un deuxième filet formant un canal dédoublé (14) avec ledit premier filet, ledit canal dédoublé (14) étant divisé en un canal de récupération (7) afin de récupérer le matériau fondu et un canal de friction (8) adapté pour loger la fraction solide, ledit canal de friction (8) ayant la même profondeur que ledit premier canal, ledit canal de récupération (7) ayant une profondeur croissante ;
une troisième section comprenant un troisième filet qui présente un angle de pression (12) avec l'axe (101) de la vis et forme un canal sous pression (11) et un canal d'équilibrage et de friction (9) au niveau de l'extrémité de ladite troisième section, ledit canal de récupération (7) ayant atteint sa profondeur maximale ;
une quatrième section (13) dans laquelle la profondeur dudit canal de récupération (7) décroît jusqu'à la profondeur dudit canal sous pression (11) ;
une cinquième section dans laquelle lesdits deuxième filet et troisième filet décroissent et se terminent dans ledit premier canal (7, 18) et ledit canal sous pression (11).

2. Vis selon la revendication 1, **caractérisée en ce que** ledit premier filet (33) forme un premier angle (6) avec l'axe (101) de la vis, et ledit angle détermine la poussée appliquée aux granulés.

3. Vis selon la revendication 1 ou 2, **caractérisée en ce que** ledit filet du canal dédoublé forme un angle de friction (10) avec l'axe (101) de la vis.

4. Vis selon l'une, ou plusieurs, des revendications précédentes, **caractérisée en ce qu'**elle se termine en un anneau d'écoulement laminaire anti-mémoire (15).
